Europäisches Patentamt

(19) European Patent Office

Office européen des brevets

(11) Publication number: **0 073 171**
**B1**

(12) **EUROPEAN PATENT SPECIFICATION**

(45) Date of publication of patent specification: **02.01.86**

(51) Int. Cl.⁴: **B 01 D 53/14**

(21) Application number: **82401557.2**

(22) Date of filing: **19.08.82**

(54) **Process for removing contaminant gases from a gas stream.**

(30) Priority: **20.08.81 US 294672**

(43) Date of publication of application:
**02.03.83 Bulletin 83/09**

(45) Publication of the grant of the patent:
**02.01.86 Bulletin 86/01**

(84) Designated Contracting States:
**BE DE FR GB IT**

(56) References cited:
**DE-A-2 557 396**
**US-A-3 266 219**
**US-A-4 265 642**

(73) Proprietor: **EASTMAN KODAK COMPANY**
**343 State Street**
**Rochester New York 14650 (US)**

(72) Inventor: **Bober, Thomas W.**
**286 Elmgrove Road**
**Rochester New York 14626 (US)**
Inventor: **Bohannon, Kathryn T.**
**513 Pluto Court**
**Ft. Collins Colorado 80526 (US)**

(74) Representative: **Parent, Yves**
**Kodak-Pathé Département des Brevets et**
**Licences 30, rue des Vignerons B.P. 60**
**F-94302 Vincennes Cedex (FR)**

Courier Press, Leamington Spa, England.

# Description

This invention relates to purifying a gas stream containing gaseous contaminants. More particularly, it relates to a process for removing gaseous contaminants, such as inorganic gases or vapors of volatile organic compounds, from gas streams, such as exhaust air, before such gas streams are discharged into the environment.

When volatile organic compounds, such as petroleum products, hydrocarbons and solvents, are stored, transported or used as reactants or solvents during chemical reactions or subsequent chemical processing steps (e.g. centrifugation or crystallization), such compounds volatilize and form gaseous mixtures. In the past, such gaseous mixtures have generally been vented into the atmosphere in order to protect those working in the vicinity. This venting of exhaust gases has contributed to air pollution.

Of particular concern in the area of air pollution control are the high levels of vapors of such volatile organic compounds which can contaminate exhaust air streams in a wide variety of chemical manufacturing operations. Since many of such air contaminants are operating materials (e.g. solvents or reactants), attempts have been made at the point of use to reduce or prevent the escape of vapors of such compounds to the environment. In many cases, however, the amounts of such compounds in exhaust gas streams cannot be reduced sufficiently to comply with increasingly stringent regulatory limits which are being placed on discharge to the environment. Consquently, it is necessary for the exhaust gas streams to be subjected to purifying processes which remove considerable quantities of the volatile organic compounds as well as any inorganic gases and particulate matter.

Those who wish to control emission of gaseous contaminants to the environment have relied primarily on gas absorption whereby a contaminant gas is solubilized or dissolved in an absorption liquid. Gas absorption by an absorption liquid occurs when a molecule of gaseous contaminant diffuses across the gas-liquid interface from the gas stream into the liquid. The driving force for this diffusion is the difference between the concentration of gaseous contaminant in the gas stream and that in the absorption liquid. As gaseous contaminant moves into the absorption liquid, a concentration gradient is established therein.

Removal of inorganic gaseous contaminants from gas streams has been accomplished with conventional gas absorption equipment employing water, an aqueous solution containing various reagents or a water-miscible liquid as the absorption liquid. Such absorption equipment is also used to remove some vapors of volatile organic compounds which are water soluble, such as vapors of alcohols. However, the removal of a wide range of vapors of volatile organic compounds, and particularly vapors of nonpolar compounds like hydrocarbons, petroleum fractions and oils with aqueous absorption liquids occurs, if at all, to only a very limited extent.

Vapors of volatile organic compounds have been removed from a gaseous mixture with an absorption liquid comprising a particular mineral oil and certain organic compounds. Such absorption liquids are specific to water-insoluble contaminants and generally cannot be used to remove appreciable amounts of water-soluble contaminants. Also, U.S. Patent 4,265,642, issued May 5, 1981, discloses the removal of volatile organic solvents from an organic solvent-laden air stream by contacting the stream with a multiphase absorption liquid, referred to therein as "a liquid multiphase scrubbing media". This multiphase scrubbing media comprises an inert carrier phase such as water and a solvent-capturing phase such as surfactant micelles or oil-in-water emulsions, which phase absorbs the specific solvents present in the air stream.

It is apparent from the previous discussion that gas absorption processes for absorbing gaseous water-soluble contaminents and those for absorbing gaseous water-insoluble contaminents are not interchangeable. To overcome this problem, multi-zone absorption processes have been designed which include two or more separate absorption zones in series. Each zone is designed to remove particular contaminants. For example, in a two-zone process, a first zone is used to remove gaseous, water-soluble contaminants, and a second zone is used to remove gaseous, water-insoluble contaminants from the same gas stream.

Such multi-zone absorption processes are adequate to remove most gaseous contaminants. However, they are quite expensive due to the multiple absorption zones needed to successively remove particular contaminants (i.e. they require additional equipment and maintenance) and are usually permanently fixed in place due to the size and amount of equipment. Further, such processes are limited in their capability to efficiently remove gaseous contaminants when the concentrations and kinds of such contaminants vary rapidly with time. Any attempt to adjust the process to handle such variations usually means additional equipment and expense. Meanwhile, during any adjustment period, emission of contaminants into the environment may be increased appreciably.

This invention provides a gas absorption process which simultaneously removes a plurality of gaseous contaminants from a gas stream and overcomes many of the disadvantages of known gas absorption processes, as described previously herein. Accordingly, this invention provides a gas absortion process for purifying a gas stream containing a plurality of gaseous contaminants. This process comprises contacting the gas stream with a plurality of mutually immiscible absorption liquids which are distributed within the gas stream in a form which individually and preferentially dissolve certain gaseous contaminants and which provides extensive surface area over which gas absorption can take place and is characterized in that the gas stream is simultaneously contacted with the absorption liquids and these liquids preferentially dissolve the gaseous contaminents in the gas stream.

A significant advantage of the process of this invention is that it provides substantially simultaneous removal of varying kinds of gaseous contaminants from a gas stream without the use of multiple absorption zones. This advantage is realized by using an absorption medium comprised of a plurality, i.e. two or more, of mutually immiscible absorption liquids. Each liquid preferentially dissolves only certain contaminant gases (and not others) in the single gas absorption zone.

An unexpected feature of this invention is that the use of two or more mutually immiscible absorption liquids in a gas absorption zone of a given size results in increased gas absorption. It could reasonably be expected that one absorption liquid would interfere with the absorption capability of a mutually immiscible absorption liquid. Surprisingly, it has been found that for a given absorption zone size, such absorption liquids absorb contaminants substantially independently of each other. This provides increased gas absorption efficiency in comparison to comparable prior art processes. This feature of the invention is demonstrated in the following Examples. The increase in absorption efficiency made possible by this invention gives one skilled in the art the option of designing smaller, less expensive and more portable gas absorption apparatus. This could be very useful in a case where it is desired to move the absorption apparatus from one location to another.

Another significant advantage of the process of this invention is that efficient gas absorption is exhibited even when the kind and concentration of gaseous contaminants varies widely, as often occurs in chemical operations which are operated on a bath or intermittent basis. The effluent gas streams from many of these operations rarely have the same content from one hour to the next and often vary on a minute to minute basis. The process of this invention efficiently and effectively purifies such gas streams. To handle such variations, the weight ratio of absorption liquids can be varied, e.g. by recycling any of them to the gas absorption zone as needed.

FIG. 1 is a schematic diagram illustrating the gas absorption process of this invention, including the flow path of the various fluids associated with it.

FIG. 2 is a schematic diagram illustrating the process of this invention and a comparative process.

FIG. 3 is a graph wherein overall solvent removal is plotted as a function of total absorber bed depth for the absorption processes of FIG. 2.

FIG. 4 is a schematic diagram illustrating the process of this invention compared to two control processes.

FIG. 5 is a graph wherein overall solvent removal is plotted as a function of the composition of the inlet gas stream for the absorption processes of FIG. 4.

FIG. 6 is a graph wherein overall solvent removal is plotted as a function of the composition of the inlet gas stream for the absorption processes illustrated in FIG. 2.

The gas absorption process of this invention can be used to purify a gas stream, e.g. an effluent air stream, thereby removing many kinds of gaseous contaminants, typically mixtures of two or more contaminants, in a single gas absorption zone. This purification is due to the use of particular absorption liquids which individually and preferentially dissolve certain gaseous contaminants. Gaseous contaminants are removed simultaneously in the process of this invention, i.e., for a given residence time and volume of gas, all absorbed contaminants are removed at substantially the same time. This is possible because the gas stream is contacted with the plurality of absorption liquids simultaneously, i.e., at the same or substantially the same time.

In the process of this invention, contaminants are removed when a particular gaseous contaminant is preferentially solubilized or dissolved in one of the absorption liquids. Contaminant gas crosses the gas-liquid boundary into the absorption liquid (e.g. in the form of a droplet, thin film or fine stream) because of a concentration difference, and continues to be so absorbed until an equilibrium state is achieved.

This mechanism of purification is contrasted to prior art purification processes whereby particulate matter (whether solid or liquid) is removed from gas streams by coalescence on nucleating sites, flocculation, agglomeration or a physical envelopment of the matter by a washing or scrubbing medium. Such a mechanism is described in, for example, U.S. Patent 2,858,903, issued November 4, 1958. In the process described therein, the electrokinetic energy potentials of liquid droplets of an oil/water emulsion are increased to facilitate the approach of particulate matter (solid and liquid) to the droplet with resulting contact, adherence, coalescence of particle and droplet and removal from the gas stream. It is asserted in that patent that small aerosol particles are increased in size by condensing water vapor on them so they can be removed with an emulsion droplet.

For convenience in describing this invention, the absorption liquids used in the practice of this invention are hereinafter referred to as a "first absorption liquid" and a "second absorption liquid." Preferably, a first absorption liquid is water or an aequeous solution. Water, or aqueous solutions including various reagents known to be useful to improve absorption of specific inorganic gases, can be used to remove such inorganic gaseous contaminants as ammonia, hydrogen fluoride, nitrogen oxides, sulfur dioxide, carbon monoxide, hydrogen sulfide, hydrogen chloride, hydrogen bromide and bromine. For example, the aqueous solution can be a caustic or other similar solution containing one or more alkaline reagents such as, for example, sodium hydroxide, calcium hydroxide, ammonia, aluminum hydroxide, potassium carbonate or monoethanolamine for removing acidic contaminants; or an acidic solution containing one or more acidic reagents such as, for example, phosphoric acid, sulfuric acid for removing alkaline contaminants. In addition, one or more mild oxidizing agents, such as sodium hypochlorite or hydrogen peroxide, can be included in the solutions as long as the second absorption liquid (described hereinafter) is not adversely affected by them.

The first absorption liquid can also be used to remove certain vapors of volatile organic compounds which are substantially water soluble and substantially insoluble in the second absorption liquid. Such compounds include substantially water soluble organic solvents. Examples of such volatile organic compounds include methanol, ethanol, isopropanol, acetone, methyl acetate, mercaptans, glycols, acetic acid, isopropyl ether, pyridine, acetonitrile and dioxane. It should be apparent to those skilled in the art that such compounds are substantially water soluble for the purposes described herein, as long as they are more soluble in water than in the second absorption liquid.

Various nonaqueous materials can be used as first absorption liquids. They are nonvolatile and preferentially dissolve the substantially water-soluble gaseous contaminants. Examples of such nonaqueous first absorption liquids include ethylene glycol, propylene carbonate, butoxy diethylene glycol acetate, acetic acid, high boiling alcohols, Carbowaxes [poly(ethylene glycols) and poly(propylene glycols) marketed by Union Carbide Corporation of New York, New York, U.S.A.] and others described in U.S. Patent 4,265,944, issued May 5, 1981. Mixtures of first absorption liquids can be used in the practice of this invention if desired.

The second absorption liquid useful in the practice of this invention is an absorption liquid which is immiscible in the first absorption liquid. The second absorption liquid can be a water-immiscible absorption liquid, such as an oil or mixture of oils, each having a boiling point of from about 150°C to about 450°C under atmospheric conditions and a viscosity less than 100 m·Pa·s (centipoises) under conditions of use in this invention. Preferably, this oil is a non-saponifiable, nondrying mineral, synthetic, paraffinic, animal or vegetable oil which has a sufficiently high boiling point and low vapor pressure at the boiling point of water to prevent loss by evaporation when heated gas streams are treated, and has a viscosity less than 10 m·Pa·s (centipoise). Such oils have a molecular weight which varies widely often less than 5000, and preferably less than 500. A nondrying oil is one that does not react with oxygen during use. A particularly useful oil is a mineral oil marketed under the tradename "Mentor 28" by Exxon Corporation of Houston, Texas, U.S.A.

The second absorption liquid is used to remove gaseous contaminants which are not soluble in the first absorption liquid. Such gaseous contaminants include vapors of substantially water-insoluble, volatile organic compounds, and particularly vapors of substantially water-insoluble volatile organic solvents. Examples of such volatile organic compounds include toluene, hexane, heptane, methyl methacrylate, ethylene dichloride, benzene, xylene, butane, naphtha, styrene, methylene dichloride, chlorobenzene and methyl chloroform. Mixtures of second absorption liquids can be used in the practice of this invention if desired.

When the gas stream is contacted with the mutually immiscible absorption liquids, they are distributed within the gas stream. Preferably, the liquids are uniformly distributed within the gas stream. In other words, the liquids are distributed in the gas stream in a manner such that the probabilities that any given gaseous contaminant molecule will encounter the first absorption liquid or the second absorption liquid do not vary substantially across the absorption zone. Such contact is accomplished by providing the absorption liquid in a form which has extensive surface area over which gas absorption can take place. Preferably, the absorption liquids absorb while in the form of a multitude of droplets. Such droplets are generally of a size in the range of from 10 to 1000 microns in diameter. However, the absorption liquids can absorb while in other forms, including fine streams, thin films and free-falling curtains.

The absorption liquids are preferably introduced into the gas absorption zone as individual liquid streams and uniformly mixed during or soon after such introduction. Alternatively, they can be premixed or emulsified, (either liquid being emulsified in the other with suitable agitation and emulsifiers) and introduced into the gas absorption zone as a single liquid. The weight ratio of the first absorption liquid to the second absorption liquid can vary considerably depending upon the concentration and type of contaminants in the gas stream. The ratio can be from 1:10 to 10:1, and is preferably from 1:2 to 2:1.

In practicing this invention, the mass flux ratio of the total mass of combined absorption liquids to the mass of the gas stream can vary considerably depending upon several factors such as the concentration and type of contaminants in the gas stream, the particular absorption liquids used, the gas stream mass flux and the particular absorption equipment design. The mass flux ratio of the total mass of the absorption liquids to the mass of the gas stream can be from 1:10 to 10:1, and is preferably from 1:2 to 4:1. Mass flux is the mass per unit of time per unit of cross-sectional area. The mass flux ratio is sometimes referred to in the prior art as the liquid to gas (L/G) ratio.

As previously described herein, the process of the present invention can be used to remove a wide variety of gaseous contaminants from a gas stream. Such a gas stream is generated by a number of sources, including industrial, manufacturing, storage or commercial processes or operations. The concentration of any or all contaminants can vary widely during purification. The process of this invention is useful for purifying gas streams having from 1 to 10,000 parts per million of gaseous contaminants.

For convenience in describing this invention, the phase "gas stream containing first and second gaseous contaminants" is used herein. Such terminology encompasses gas streams which contain more than two gaseous contaminants as well as those which contain only two gaseous contaminants. Such gaseous contaminants include both inorganic and organic contaminants. Similarly, reference to the use of "first and second absorption liquids" encompasses the use of more than two absorption liquids as well as the use of only two absorption liquids.

Gas streams purified by the process of this invention can enter the gas absorption zone at temperatures and pressures which can vary greatly depending upon the particular absorption liquids used. The process can be used to purify gas streams entering the zone at a temperature of from 0°C to 99°C and at atmospheric, subatmospheric or superatmospheric pressure.

The process of this invention can be practiced with gas absorption apparatus constructed according to known design equations. Useful gas absorption apparatus includes means for receiving the gas stream, such as a vertical tower (sometimes called a column or absorber) wherein gas absorption occurs. However, any variation from vertical, including a horizontal gas absorption zone, is also useful. Some useful gas absorption apparatus are referred to in the prior art as spray towers, cyclone spray absorbers, venturi spray absorbers or sparged stirred tank absorbers.

The gas absorption apparatus also contains means for introducing the absorption liquids into the gas absorption zone. Such means is preferably a plurality of nozzles. Although not essential, it is preferred that the gas absorption apparatus have some means for restricting the cross-sectional area of the absorption zone to provide increased liquid-gas contact. Generally, such restriction is in the form of trays or plates, packed beds of material or a venturi. Restrictions in the form of trays or plates can have sieve perforations, bubble caps, weirs or modifications thereof as is well known in the art. More preferably, the gas absorption zone is a vertical column packed with any or a mixture of various packing materials. Useful packing materials include marble spheres or chips; fiberglass, metal or plastic strands or mesh pads; or commercially-available packings known as Raschig rings, Lessing rings, Berl saddles, Intalox saddles, Tellerettes and Pall rings.

Gas absorption is accomplished as the absorption liquid contacts the gas stream in the gas absorption zone. This contact can be in concurrent, crosscurrent or countercurrent fashion. Preferably, contact is in countercurrent fashion.

Once the gaseous contaminants are removed from the gas stream, the purified gas stream can be vented from the gas absorption zone and discharged into the environment. The absorption liquids containing dissolved contaminants are then sent to a suitable recovery device (e.g. a stripper or distillation column), incinerated or used for another purpose. Usually, where a mixture of two immiscible absorption liquids is used, the liquids settle at the bottom of the gas absorption zone and separate into two liquid layers, each of which can be recycled to the absorption zone with a recirculating means or treated differently if desired. Preferably, the contaminant-bearing absorption liquids are sent to stripping means where the dissolved contaminants are removed for reuse, incineration or disposal. The purified absorption liquids are then recirculated to the gas absorption zone for reuse. A useful method of recovering dissolved organic compounds from an absorption liquid is described in U.S. Patent 4,054,429, issued October 18, 1977.

One embodiment of this invention is a gas absorption process for purifying a gas stream in a single gas absorption zone, the gas stream containing first and second gaseous contaminants, whereby the gaseous contaminants are simultaneously removed from the gas stream. This process comprises:

(1) introducing the gas stream into the gas absorption zone; and

(2) simultaneously contacting the gas stream with first and second mutually immiscible absorption liquids, each of which is uniformly distributed within the gas stream in a multitude of droplets to provide extensive surface area over which gas absorption can take place, the first absorption liquid preferentially dissolving the first gaseous contaminant and the second absorption liquid preferentially dissolving the second gaseous contaminant.

A preferred embodiment of this invention is a gas absorption process for purifying a gas stream in a single vertical gas absorption tower, which gas stream contains at least one water-soluble, inorganic gasous contaminant, at least one vapor of a substantially water-soluble, volatile organic compound and at least one vapor of a 'substantially water-insoluble, volatile organic compound, whereby such inorganic gaseous contaminant and vapors of substantially water-soluble and substantially water-insoluble volatile organic compounds are simultaneously removed from the gas stream. This process comprises, in order, the steps of:

(1) introducing the gas stream into the bottom of the gas absorption tower;

(2) spraying, from the top of the gas absorption tower, an aqueous solution and a water-immiscible oil having a viscosity less than 10 centipoises and a boiling point of from 150°C to 450°C under atmospheric conditions, so that each of the aqueous solution and oil is uniformly distributed within the gas stream in a multitude of droplets to provide extensive surface area over which gas absorption can take place, the aqueous solution preferentially dissolving the inorganic gaseous contaminant and the vapor of the substantially water-soluble, volatile organic compound, and the oil preferentially dissolving the vapor of the substantially water-insoluble, volatile organic compound, wherein the weight ratio of the aqueous solution to the oil is from 1:10 to 10:1, and the mass flux ratio of the total mass of the aqueous solution and the oil to the gas stream is from 1:2 to 4:1;

(3) removing the inorganic gaseous contaminant and the vapors of the organic compounds from the aqueous solution and the oil; and

(4) recirculating the aqueous solution and the oil to the gas absorption tower.

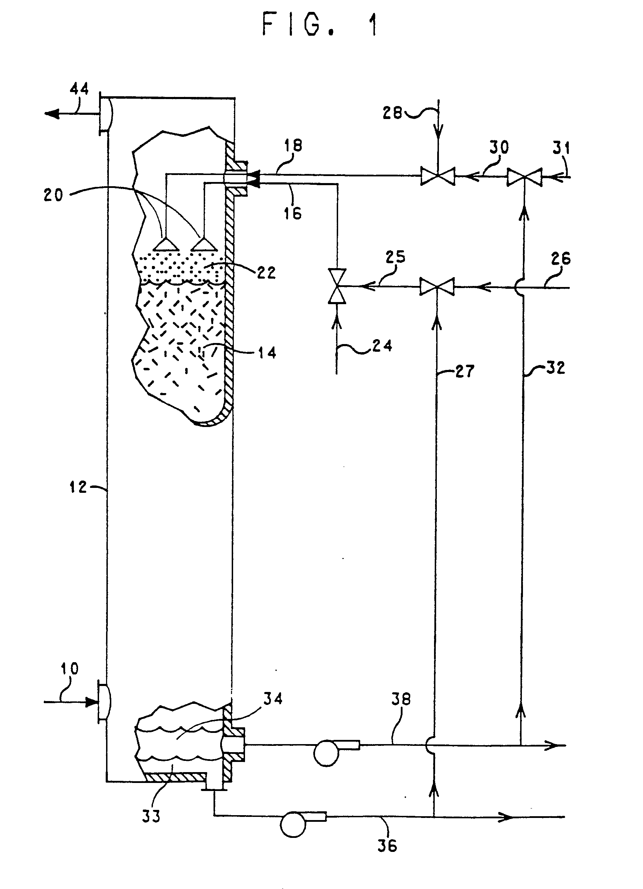

In this process, it is particularly advantageous to adjust the composition and mass flux of absorption liquids during the absorption of gaseous contaminants in response to changes in the composition and mass flux of the gas stream. This type of adjustment can be readily accomplished with means for sensing such changes and means for controlling such mass fluxes (e.g. manual or nonmanual). With respect to this preferred embodiment, reference is made to the schematic drawing of FIG. 1. In FIG. 1, gas stream 10 contaminated with various gaseous contaminants is introduced into gas absorption tower 12 at the bottom. The interior of tower 12 is filled with a packing 14, such as Tellerettes. An aqueous absorption liquid 16 (e.g. a caustic solution) and a water-immiscible absorption liquid 18 (e.g. a mineral oil) are introduced into tower 12 at the top so that contact of gas stream 10 and absorption liquids 16 and 18 is in countercurrent fashion.

Absorption liquids 16 and 18 are sprayed in tower 12 above packing 14 with a plurality of nozzles 20 to form a multitude of droplets 22 so that absorption liquids 16 and 18 are thoroughly mixed. Absorption liquid 16 is formed from makeup stream 24 and recycle stream 25. Similarly, absorption liquid 18 is formed from makeup stream 28 and recycle stream 30. Recycle stream 25 is composed of recycle stream 26 generated by a stripping apparatus (not shown) and recycle stream 27 from the bottom of tower 12. Recycle stream 30 is composed of recycle stream 31 generated by a stripping apparatus (not shown) and a recycle stream 32 from the bottom of tower 12. As the absorption liquids move downwardly through packing 14, they absorb gaseous contaminants from gas stream 10 and collect at the bottom of tower 12 in two distinct layers, aqueous layer 33 and water-immiscible layer 34. The contaminated liquids in these layers are pumped in separate streams 36 and 38, respectively, to a stripping apparatus (not shown) where the contaminants are removed or are recycled in streams 27 and 32, respectively. Purified absorption liquids are recycled from the stripping apparatus to tower 12 in streams 26 and 31, respectively.

The following Examples are included to illustrate the process of this invention.

### Example 1

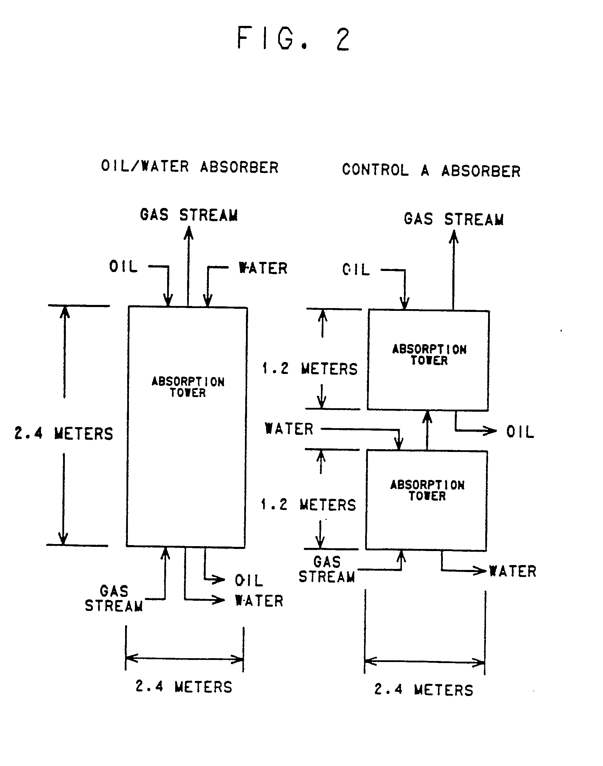

To show the improved efficiency of removal of gaseous contaminants in the process of this invention, a single absorption tower using an oil/water mixture for absorption was compared to a prior art process (Control) utilizing two separate absorption towers in series. The total flow rates of the gas stream and absorption liquids and the absorption zone dimensions were the same for each of these processes. The two processes are illustrated schematically in FIG. 2.

To make this comparison, data on absorption efficiencies of water and a mineral oil ("Mentor 28" a tradename of Exxon Corp., Houston, Texas, U.S.A.) were gathered from laboratory scale runs. Such data was then used in conventional chemical engineering equations to predict the performance of large-scale gas absorption processes, hereinafter referred to as "predicted removal efficiencies."

The prediction of large-scale gas absorption was made in the following manner. Using Henry's Law, vapor-liquid equilibrium data for each of methanol and heptane in water and mineral oil were determined. Using this equilibrium data, known chemical engineering equations and a laboratory scale absorption tower like that illustrated in FIG. 1, mass transfer equations for methanol and heptane were calculated in both water and mineral oil.

Large-scale gas absorption efficiencies were then predicted for a production-size absorption tower as illustrated in FIG. 1. The parameters used in the calculations were as follows:

A single tower in which water and mineral oil are mixed soon after introduction into the top of the tower. A gas stream contaminated with methanol and heptane is introduced into the bottom of the tower. A tower having a diameter of 2.4 meters and an absorption zone (packed bed) depth of 2.4 meters. A flow rate of oil and water of 568 liters/min each for a total process flow rate of 1136 liters/min. A flow rate for the gas stream of 566 $m^3$/min. Mass flow ratios of oil to gas stream and water to gas stream of 0.69 and 0.83, respectively. A concentration of 1,000 ppm of each of methanol and heptane in the gas stream prior to entering the tower.

Control A is a prior art gas absorption process having gas absorption efficiencies predicted as described herein for two separate absorption towers and separate absorption liquids used in series. The parameters used for the calculations were as follows:

Each tower having a diameter of 2.4 meters and an absorption zone (packed bed) depth of 1.2 meters for a total process depth of 2.4 meters. Mineral oil introduced into the first tower at a flow rate of 568 liters/min and water introduced into the second tower at the same rate for a total process flow rate of 1136 liters/min. A gas stream with the same flow rate and contaminants described previously in this Example being sent through each tower in succession.

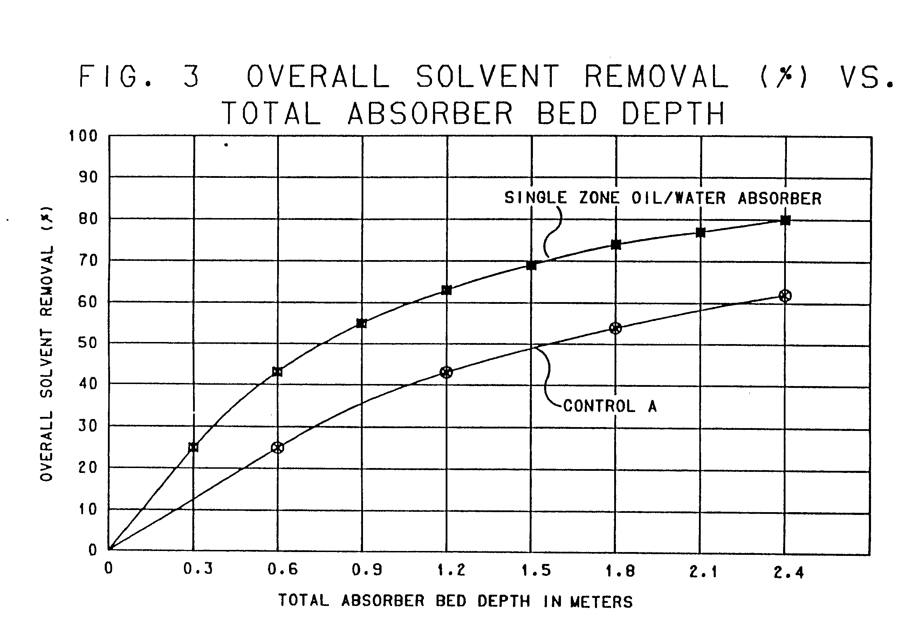

The overall solvent removal efficiencies (%) for both the single zone oil/water absorption process of this invention and the Control absorption process are plotted in FIG. 3. This figure illustrates that over the entire range of packed bed length or depth, the process of this invention will remove at least 30% more of the gaseous contaminants methanol and heptane than the Control absorption process. In other words, the process of this invention will reduce the emissions of those contaminants by at least 30% and as much as 50% more than the Control depending upon the depth of the packed bed.

Example 2

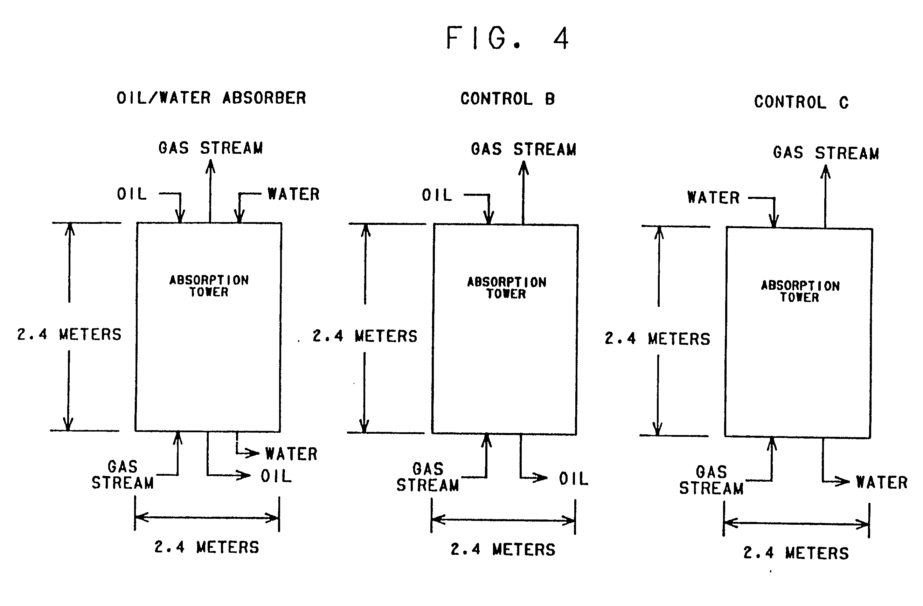

This is a comparative example similar to Example 1. The predicted removal efficiencies of the process of the present invention are compared to the predicted removal efficiences of two prior art processes using either mineral oil or water as the absorption liquid. The total flow rates of the gas stream and absorption liquids and the absorption zone dimensions are the same for each of these processes. The compared processes are illustrated schematically in FIG. 4.

The parameters used in calculating the absorption efficiencies were as follows:

Each absorption tower having a diameter of 2.4 meters and an absorption zone (packed bed) depth of 2.4 meters. A flow rate for the gas stream of 566 m³/min. Flow rates for the mineral oil and water in the oil/water absorber of 568 liters/min each, for a total process flow rate of 1136 liters/min. A flow rate of mineral oil and water in controls B and C, respectively, of 1136 liters/min each. A gas stream containing 1000 ppm of each of methanol and heptane prior to entry into the tower.

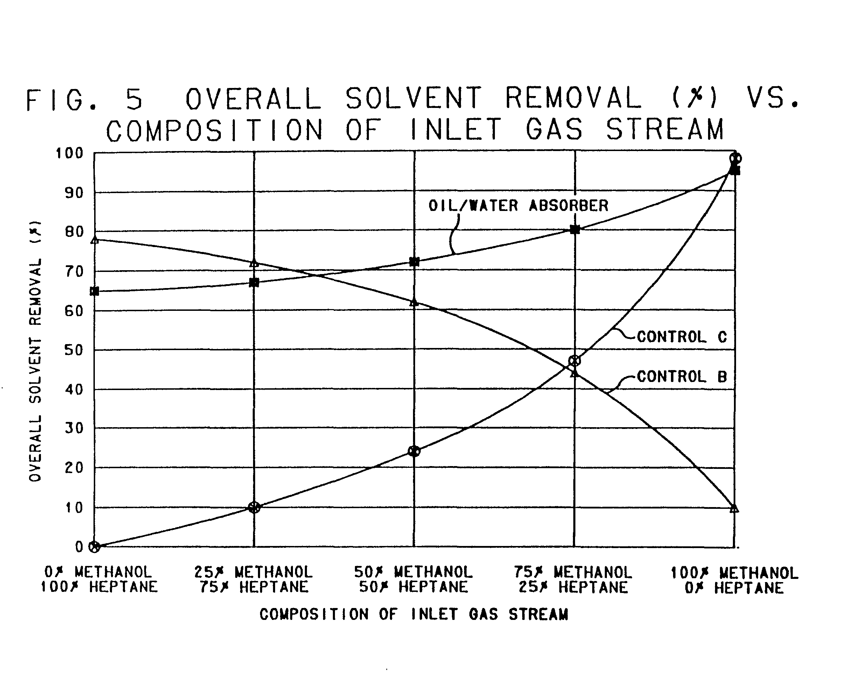

The overall solvent removal efficiencies (%) for the single zone oil/water absorption process of the present invention and the Control processes are shown in FIG. 5. The graph illustrates that the gas absorption process of the present invention will be more efficient than prior gas absorption processes in removing the gaseous contaminants methanol and heptane over a wide range of contaminant concentrations.

Example 3

This is a comparative example like Example 2 except that the gaseous contaminants in the gas stream are acetone and hexane. The predicted removal efficiencies of an oil/water absorption process were compared to those of two Control processes as done in Example 2. Mineral oil and water alone are absorption liquids in Controls D and E respectively.

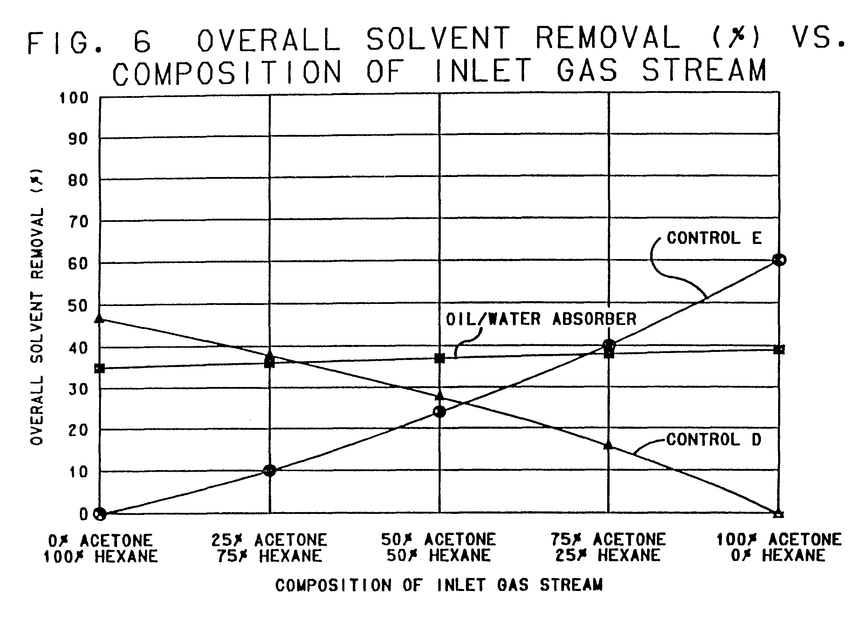

FIG. 6 illustrates the overall solvent removal efficiencies (%) for the single zone oil/water absorption process of the present invention and the Control (prior art) processes.

**Claims**

1. A gas absorption process for purifying a gas stream containing a plurality of gaseous contaminants, which process comprises contacting the gas stream with a plurality of mutually immiscible absorption liquids which individually and preferentially dissolve certain gaseous contaminants and which are distributed within the gas steam in a form which provides extensive surface area over which gas absorption can take place, characterized in that the gas stream is simultaneously contacted with the absorption liquids and these liquids preferentially dissolve the gaseous contaminants in the gas stream.

2. The process of claim 1 wherein each of the absorption liquids is uniformly distributed within the gas stream in the form of a multitude of droplets or fine streams.

3. The process of claim 1 wherein the absorption liquids are mixed together.

4. The process of claim 1 wherein one of the absorption liquids is emulsified within the other.

5. The process of any of claims 1—4 wherein one of the absorption liquids is water or an aqueous solution.

6. The process of claim 5 wherein the aqueous solution is a caustic absorption liquid.

7. The process of any of claims 1—6 wherein one of the absorption liquids is a water-immiscible absorption liquid.

8. The process of claim 7 wherein the water-immiscible absorption liquid is an oil having a viscosity of less than 10 m·Pa·s and a boiling point of from 150°C to 450°C under atmospheric conditions.

9. The process of any of claims 1—8 wherein the gaseous contaminants are vapors of volatile organic compounds and are present in the gas stream in a concentration in the range of from 1 to 10,000 parts per million.

10. The process of any of claims 1—8 wherein the gaseous contaminants are present in the gas stream in a concentration in the range of from 1 to 10,000 parts per million.

**Revendications**

1. Procédé d'absorption de gaz, pour purifier un courant gazeux contenant plusieurs gaz contaminants, lequel procédé consiste à mettre en contact le courant gazeux avec plusieurs liquides absorbants mutuellement non miscibles qui dissolvent chacun préférentiellement certains gaz contaminants et qui sont distribués dans le courant gazeux sous une forme qui établit une surface étendue où l'absorption de gaz peut prendre place, caractérisé en ce que le courant gazeux est mis en contact simultanément avec les liquides absorbants et en ce que ces liquides dissolvent préférentiellement les gaz contaminants du courant gazeux.

2. Le procédé de la revendication 1, dans lequel chacun des liquides absorbants est distribué uniformément dans le courant de gaz sous la forme d'une multitude de gouttelettes ou de fins filets.

3. Le procédé de la revendication 1, dans lequel les liquides absorbants sont mélangés ensemble.

4. Le procédé de la revendication 1, dans lequel l'un des liquides absorbants est émulsifié dans l'autre.

5. Le procédé de l'une quelconque des revendications 1—4, dans lequel l'un des liquides absorbants est de l'eau ou une solution aqueuse.

6. Le procédé de la revendication 5, dans lequel la solution aqueuse est un liquide absorbant caustique.

7. Le procédé de l'une quelconque des revendications 1—6, dans lequel l'un des liquides absorbants est un liquide absorbant non miscible dans l'eau.

8. Le procédé de la revendication 7, dans lequel le liquide absorbant non miscible dans l'eau est une huile présentant une viscosité d'au moins 10 m.Pa.s et un point d'ébulition compris entre 150°C et 450°C à la pression atmosphérique.

9. Le procédé de l'une quelconque des revendications 1—8, dans lequel les contaminants gazeux sont des vapeurs de composés organiques volatils présentes dans le courant de gaz avec une concentration comprise entre 1 et 10.000 parties par million.

10. Le procédé de l'une quelconque des revendications 1—8, dans lequel les gaz contaminants sont présentes dans le courant de gaz avec une concentration comprise entre 1 et 10.000 parties par million.

**Patentansprüche**

1. Gasabsorptionsverfahren zum Reinigen eines eine Vielzahl gasförmiger Verunreinigungen enthaltenden Gasstroms, worin der Gasstrom mit einer Vielzahl miteinander nicht mischbarer Absorptionsflüssigkeiten in Berührung gebracht wird, die einzeln und vorzugsweise bestimmte gasförmige Verunreinigungen lösen und die innerhalb des Gasstroms in einer Form verteilt sind, die einen ausgedehnten Oberflächenbereich ergibt, auf dem die Gasabsorption erfolgen kann, dadurch gekennzeichnet, daß der Gasstrom gleichzeitig mit den Absorptionsflüssigkeiten in Berührung gebracht wird und diese Flüssigkeiten vorzugsweise die in dem Gasstrom enthaltenen gasförmigen Verunreinigungen lösen.

2. Verfahren nach Anspruch 1, dadurch gekennzeichnet, daß jede der Absorptionsflüssigkeiten in dem Gasstrom gleichmäßig in Form vieler Tröpfchen oder feiner Ströme verteilt ist.

3. Verfahren nach Anspruch 1, dadurch gekennzeichnet, daß die Absorptionsflüssigkeiten miteinander vermischt werden.

4. Verfahren nach Anspruch 1, dadurch gekennzeichnet, daß eine der Absortionsflüssigkeiten in der anderen emulgiert wird.

5. Verfahren nach einem der Ansprüche 1—4, dadurch gekennzeichnet, daß eine der Absorptionsflüssigkeiten Wasser oder eine wässrige Lösung ist.

6. Verfahren nach Anspruch 5, dadurch gekennzeichnet, daß die wässrige Lösung eine alkalische Absorptionsflüssigkeit ist.

7. Verfahren nach einem der Ansprüche 1—6, dadurch gekennzeichnet, daß eine der Absorptionsflüssigkeiten eine mit Wasser nicht mischbare Absorptionsflüssigkeit ist.

8. Verfahren nach Anspruch 7, dadurch gekennzeichnet, daß die mit Wasser nicht mischbare Absorptionsflüssigkeit ein Öl ist, das unter atmosphärischen Bedingungen eine Viskosität von weniger als 10 m.Pa.s (Centipoises) und einen Siedepunkt zwischen 150°C und 450°C besitzt.

9. Verfahren nach einem der Ansprüche 1—8, dadurch gekennzeichnet, daß die gasförmigen Verunreinigungen Dämpfe von flüchtigen organischen Verbindungen sind und in dem Gasstrom in einer Konzentration zwischen 1 und 10 000 Teilen pro Million vorliegen.

10. Verfahren nach einem der Ansprüche 1—8, dadurch gekennzeichnet, daß die gasförmigen Verunreinigungen in dem Gasstrom in einer Konzentration zwischen 1 und 10 000 Teilen pro Million vorliegen.

# FIG. 1

# F I G .  2

OIL/WATER ABSORBER          CONTROL A ABSORBER

GAS STREAM                   GAS STREAM

OIL ⎯⏐        ⏐⎯ WATER      OIL ⎯⏐

ABSORPTION TOWER             ABSORPTION TOWER

2.4 METERS                   1.2 METERS

                             WATER ⎯⏐        ⎯▶ OIL

                             1.2 METERS   ABSORPTION TOWER

GAS STREAM ⎯▶ OIL   ⎯▶ WATER   GAS STREAM ⎯▶ WATER

2.4 METERS                   2.4 METERS

FIG. 3 OVERALL SOLVENT REMOVAL (%) VS. TOTAL ABSORBER BED DEPTH

FIG. 4

OIL/WATER ABSORBER

CONTROL B

CONTROL C

4

# FIG. 5 OVERALL SOLVENT REMOVAL (%) VS. COMPOSITION OF INLET GAS STREAM

OIL/WATER ABSORBER

CONTROL C

CONTROL B

COMPOSITION OF INLET GAS STREAM

OVERALL SOLVENT REMOVAL (%)

0% METHANOL 100% HEPTANE    25% METHANOL 75% HEPTANE    50% METHANOL 50% HEPTANE    75% METHANOL 25% HEPTANE    100% METHANOL 0% HEPTANE

FIG. 6  OVERALL SOLVENT REMOVAL (%) VS. COMPOSITION OF INLET GAS STREAM